# EUROPEAN PATENT APPLICATION

(11) **EP 3 392 018 A1**
(43) Date of publication of application: **24.10.2018**
(21) Application number: 17178787.2
(22) Date of filing: 29.06.2017
(51) Int. Cl.: B29C 64/10, B33Y 10/00

(54) **QUICK COLORING METHOD FOR 3D PRINTER**

(30) Priority: 21.04.2017 TW 106113378
(71) Applicant: XYZPRINTING INC., New Taipei City 22201 (TW); Kinpo Electronics, Inc., New Taipei City 22201 (TW)
(72) Inventor: LEE, Yang-Teh, 22201 SHENKENG DIST., NEW TAIPEI CITY (TW); JUANG, Jia-Yi, 22201 SHENKENG DIST., NEW TAIPEI CITY (TW); Huang, Chun-Hsiang, 22201 SHENKENG DIST., NEW TAIPEI CITY (TW); HO, Ming-En, 22201 Shenkeng Dist., New Taipei City (TW); HSIEH, Yi-Chu, 22201 Shenkeng Dist., New Taipei City (TW); HSIEH, Shih-Sen, 22201 Shenkeng Dist., New Taipei City (TW); CHANG, Yu-Chuan, 22201 SHENKENG DIST., NEW TAIPEI CITY (TW); CHU, Ting-Chun, 22201 SHENKENG DIST., NEW TAIPEI CITY (TW)
(74) Representative: 2K Patentanwälte Blasberg Kewitz & Reichel

(57) **Abstract**

A quick coloring method for a 3D printer (1) having an ink nozzle-head (13) includes the following steps: reading an image file and a coloring route; controlling the ink nozzle-head (13) to move to a start position (51) of one of printing rows; controlling the ink nozzle-head (13) to move and to print a coloring object (3) according to the image file and the coloring route; reading a reverse image file and a reverse coloring route, in which the reverse image file records a horizontal reverse image of the image file, and the reverse coloring route records an opposite start position (61); controlling the ink nozzle-head (13) to move to the opposite start position (61) of next printing row according to the reverse coloring route; controlling the ink nozzle-head (13) to move and to print the coloring object (3) according to the reverse image file and the reverse coloring route; and re-executing above steps before a coloring operation is completed.

## Description

### BACKGROUND OF THE INVENTION

### Technical Field

The present disclosure relates to a three-dimensional (3D) printer and, in particular, to a quick coloring method for a 3D printer.

### Description of Prior Art

Due to development of three-dimensional (3D) printing technology and reduced sizes and prices of 3D printers, 3D printers have become prevalent in recent years. In order to make a finished 3D model printed out more attractive to users, industries developed 3D printers for printing 3D models with different colors.

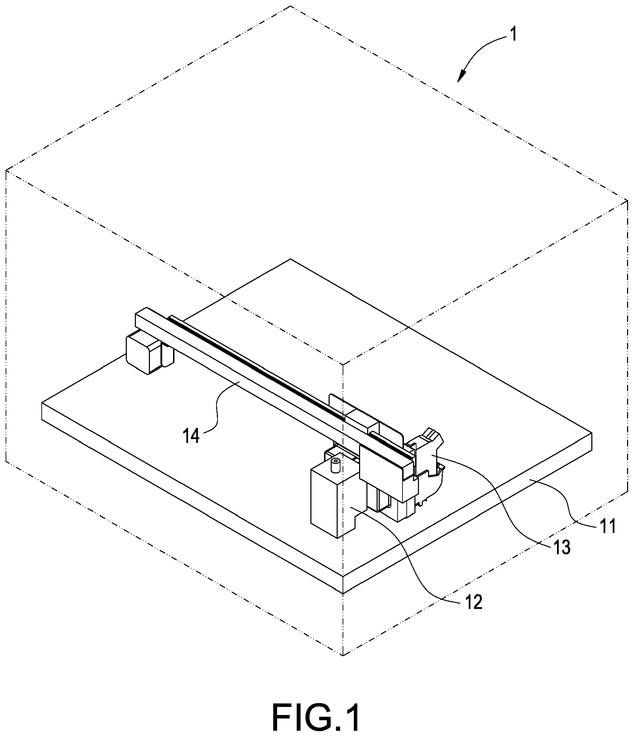

Please refer to Fig. 1, showing a conventional 3D printer. In conventional 3D printing techniques, a 3D printer (hereinafter briefly referred to as the printer 1) includes a printing platform 11, a 3D nozzle head 12, an ink nozzle head 13, and a control rod 14 used to connect and control movement of the 3D nozzle head 12 and the ink nozzle head 13. Generally, when the printer 1 is printing, the printer 1 controls the 3D nozzle head 12 to discharge formation materials onto the printing platform 11, so as to build up the required 3D models by stacking the formation materials. Furthermore, the printer 1 controls the ink nozzle head 13 to jet ink onto the formation materials, thereby coloring the 3D model.

However, just like conventional 2D printers, the printer 1 controls the ink nozzle head 13 to move along a single coordinate (e.g. along an X axis) and to perform unidirectional printing only. For example, the printer 1 controls the ink nozzle head 13 to move horizontally from coordinates (0, 0) to coordinates (100, 0) and to jet ink at the same time. However, the ink nozzle head 13 does not jet ink when the printer 1 controls the ink nozzle head 13 to return from coordinates (100, 0) to coordinates (0, 0).

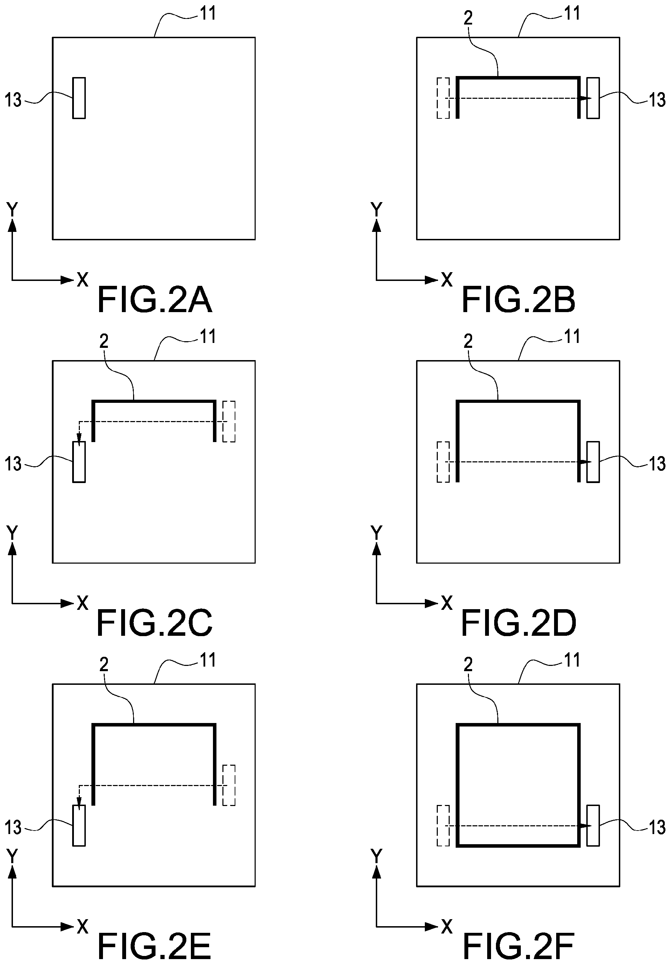

Please refer to Figs. 2A to 2F, which are first to sixth motion views illustrating a coloring operation of the 3D printer.

As shown in Fig. 2A, when it is desired to color a 3D object (not illustrated) or to print a 2D planar object, the printer 1 first controls the ink nozzle head 13 to move to a start position of a first printing row. Then, as shown in Fig. 2B, the printer 1 controls the ink nozzle head 13 to move horizontally along the X axis to an end position of the first printing row (in Fig. 2B, an example is given in which the ink nozzle head 13 moves from left most to right most on the printing platform 11), and the ink nozzle head 13 jets ink while moving, so as to color a first portion of a coloring object 2.

As shown in Fig. 2C, after printing of the first portion of the coloring object 2 is completed, the printer 1 controls the ink nozzle head 13 to move from the end position of the first printing row to the start position of a second printing row (in Fig. 2C, an example is given in which the ink nozzle head 13 moves from right most to left most), and the ink nozzle head 13 does not jet ink while moving to the start position of the second printing row.

Then, as shown in Fig. 2D, when the ink nozzle head 13 moves to the start position of the second printing row, the printer 1 again controls the ink nozzle head 13 to move horizontally along the X axis, and the ink nozzle head 13 jets ink while moving to the end position of the second printing row, so as to print a second portion of the coloring object 2.

After that, similarly, as shown in Figs. 2E and 2F, after printing of the second portion of the coloring object 2 is completed, the printer 1 controls the ink nozzle head 13 to move from the end position of the second printing row to the start position of a third printing row (without jetting ink), and then the printer 1 controls the ink nozzle head 13 to move horizontally along the X axis to move to the end position ofthe third printing row, and the ink nozzle head 13 jets ink while moving, so as to print a third portion of the coloring object 2.

In light of the above, the ink nozzle head 13 in the conventional 3D printing techniques can only perform unidirectional printing (i.e. the ink nozzle head 13 jets ink while moving from the start position of any printing row to the end position of the same printing row, but the ink nozzle head 13 does not jet ink while moving from the end position to the start position of the next printing row). In other words, only about half the time the ink nozzle head 13 spent on movement is used to perform the coloring operation. Hence, there appears to be considerable room for improving a coloring speed of the conventional 3D printer.

### SUMMARY OF THE INVENTION

It is an object of the present invention to provide an enhanced coloring method for a three-dimensional (3D) printer enabling a reliable and quicker coloring with high quality and at low costs.

This problem is solved by a coloring method for a three-dimensional (3D) printer as claimed by claim 1. Further advantageous embodiments are the subject-matter of the dependent claims.
the coloring method for a three-dimensional (3D) printer according to the present invention effectively increases a coloring speed at which an ink nozzle head of the 3D printer colors a 3D object, or increases a speed of printing a two-dimensional (2D) planar object.

In one embodiment of the present invention, the method includes the following steps: reading an image file and a coloring route by a 3D printer; controlling an ink nozzle head to move to a start position of one of printing rows according to the coloring route; controlling the ink nozzle head to move and to print a coloring object according to the image file and the coloring route; reading a reverse image file and a reverse coloring route, wherein the reverse image file records a horizontal reverse image of the image file, and the reverse coloring route records an opposite start position; controlling the ink nozzle head to move to the opposite start position of the next printing row according to the reverse coloring route; controlling the ink nozzle head to move and to print the coloring object according to the reverse image file and the reverse coloring route; repeating the above steps before a coloring operation is completed.

Compared to conventional 3D printing techniques, embodiments of the present disclosure can enable the ink nozzle head to perform the coloring operation while the ink nozzle head is moving in both forward and backward directions. Hence, a coloring speed increases.

### BRIEF DESCRIPTION OF THE DRAWINGS

The disclosure will become more fully understood from the detailed description, and the drawings given herein below is for illustration only, and thus does not limit the disclosure, wherein:
FIG. 1 is a schematic view illustrating a conventional three-dimensional (3D) printer;
FIG. 2A is a first motion view illustrating a coloring operation of the conventional 3D printer;
FIG. 2B is a second motion view illustrating the coloring operation of the conventional 3D printer;
FIG. 2C is a third motion view illustrating the coloring operation of the conventional 3D printer;
FIG. 2D is a fourth motion view illustrating the coloring operation of the conventional 3D printer;
FIG. 2E is a fifth motion view illustrating the coloring operation of the conventional 3D printer;
FIG. 2F is a sixth motion view illustrating the coloring operation of the conventional 3D printer;
FIG. 3 is a slicing process flow diagram according to the first embodiment of the present disclosure;
FIG. 4 is a coloring process flow diagram according to the first embodiment of the present disclosure;
FIG. 5A is a first coloring motion view according to the first embodiment of the present disclosure;
FIG. 5B is a second coloring motion view according to the first embodiment of the present disclosure;
FIG. 5C is a third coloring motion view according to the first embodiment of the present disclosure;
FIG. 5D is a fourth coloring motion view according to the first embodiment of the present disclosure;
FIG. 5E is a fifth coloring motion view according to the first embodiment of the present disclosure;
FIG. 5F is a sixth coloring motion view according to the first embodiment of the present disclosure;
FIG. 6A is a first coloring motion view according to the second embodiment of the present disclosure;
FIG. 6B is a second coloring motion view according to the second embodiment of the present disclosure;
FIG. 6C is a third coloring motion view according to the second embodiment of the present disclosure;
FIG. 6D is a fourth coloring motion view according to the second embodiment of the present disclosure;
FIG. 6E is a fifth coloring motion view according to the second embodiment of the present disclosure;
FIG. 6F is a sixth coloring motion view according to the second embodiment of the present disclosure;
FIG. 7A is a first coloring motion view according to the third embodiment of the present disclosure;
FIG. 7B is a second coloring motion view according to the third embodiment of the present disclosure;
FIG. 7C is a third coloring motion view according to the third embodiment of the present disclosure;
FIG. 7D is a fourth coloring motion view according to the third embodiment of the present disclosure;
FIG. 7E is a fifth coloring motion view according to the third embodiment of the present disclosure;
FIG. 7F is a sixth coloring motion view according to the third embodiment of the present disclosure;
FIG. 8 is a schematic view illustrating a 3D printer according to the first embodiment of the present disclosure;
FIG. 9 is a coloring process flow view according to the second embodiment of the present disclosure;
FIG. 10A is a first coloring motion view according to the fourth embodiment of the present disclosure; and
FIG. 10B is a second coloring motion view according to the fourth embodiment of the present disclosure.

### DETAILED DESCRIPTION OF THE INVENTION

Detailed descriptions and technical contents of the present disclosure are illustrated below in conjunction with the accompany drawings.

The present disclosure relates to a quick coloring method for a three-dimensional (3D) printer (hereinafter briefly referred to as "quick coloring method"). The quick coloring method is used in a 3D printer 1 (hereinafter briefly referred to as "printer" 1) shown in Fig. 1. In the present disclosure, when the printer 1 controls an ink nozzle head 13 to move horizontally from a start position to an end position of any printing row, the printer 1 controls at the same time the ink nozzle head 13 to jet ink to carry out a coloring operation. When the printer 1 controls the ink nozzle head 13 to return to the end position from the start position, the printer 1 also controls at the same time the ink nozzle head 13 to jet ink to carry out the coloring operation. By doing so, a coloring speed of the present disclosure is so fast that it is substantially two times the coloring speed using conventional 3D printing techniques.

It should be noted that, in the present disclosure, information adopted for coloring when the ink nozzle head 13 is moving horizontally from the start position to the end position is different from the information adopted for coloring when the ink nozzle head 13 is moving horizontally from the end position to the start position. Therefore, in one embodiment, the printer 1 needs to generate two different information pieces in a slicing process performed in advance, so as to perform printing in a forward direction (i.e. printing from the start position to the end position) and also perform printing in a backward direction (i.e. printing from the end position to the start position).

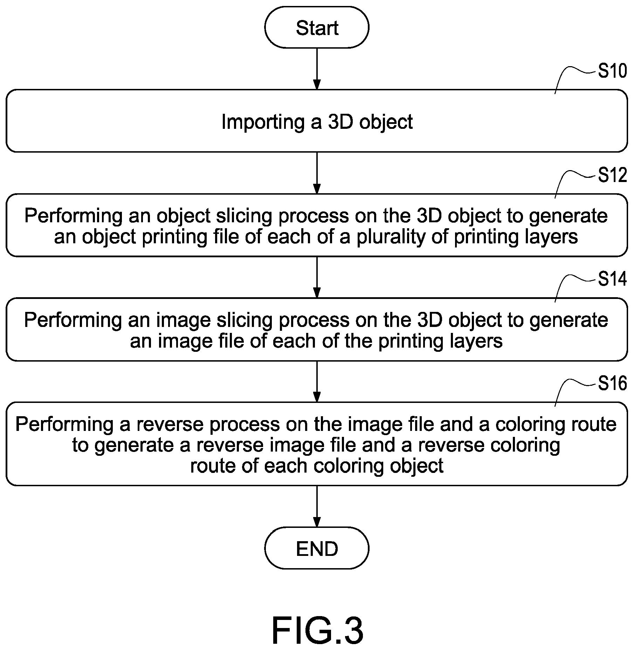

Referring to Fig. 3, Fig. 3 is a slicing process flow diagram according to the first embodiment of the present disclosure. As shown in the drawing, first the printer 1 or a computer (not illustrated) connected to the printer 1 imports a 3D object for printing (step S10). Then, a processor of the printer or the computer performs an object slicing process on the 3D object to generate an object printing file of each of a plurality of printing layers (step S12). In one embodiment, each object printing file records a printing information piece of a sliced object corresponding to each printing layer. In practice, according to the object printing files, the printer 1 controls a 3D nozzle head 12 to print the sliced objects respectively corresponding to the printing layers, so as to stack the sliced objects layer by layer to form a solid 3D model.

On the other hand, the processor of the printer 1 and the computer performs an image slicing process on the 3D object to generate an image file of each of the printing layers (step S14). In one embodiment, each image file records an image of a coloring object corresponding to each of the printing layers. In practice, according to the image files, the printer 1 controls the ink nozzle head 13 to sequentially print the coloring object on each sliced object printed by the 3D nozzle head 12, so as to color each sliced object.

After step S 14, the processor of the printer 1 or the computer performs a reverse process on the image file and a coloring route of each of the printing layers so as to generate a reverse image file and a reverse coloring route of each of the coloring objects (step S16). In detail, each coloring object has the same coloring route, and the coloring route records a start position and an end position of each of the printing rows on a printing platform 11 for the ink nozzle head 13.

In the present embodiment, the reverse image file records a horizontal reverse image of the coloring object, and the reverse coloring route records an opposite start position and an opposite end position of each of the printing rows. To be specific, the reverse coloring route uses the start position as the opposite end position, and uses the end position as the opposite start position.

Taking an example, if the start position of a printing row is located at coordinates (0, 0), and the end position of this printing row is located at coordinates (100, 0), then the opposite start position of the same printing row is located at coordinates (100, 0) while the opposite end position is located at coordinates (0, 0). To give another example, if a start position of a printing row is located at coordinates (0, 50), and the end position is located at coordinates (90, 50), then the opposite start position of the same printing row is located at coordinates (90, 50) while the opposite end position is located at coordinates (0, 50).

Accordingly, when the printer 1 controls the ink nozzle head 13 to move forwardly horizontally (e.g. moving forwardly from left to right on the printing platform 11) in one coordinate direction (e.g. an X axis), the printer 1 prints the coloring object according to the image file and the coloring route. When the printer 1 controls the ink nozzle head 13 to move backwards horizontally (e.g. moving backwards from right to left on the printing platform 11) along the same coordinate, the printer 1 prints the coloring object according to the reverse image file and the reverse coloring route (a detailed description will be provided later). Accordingly, by means of the quick coloring method, the coloring speed of the printer 1 is twice as fast as those of the conventional printing techniques.

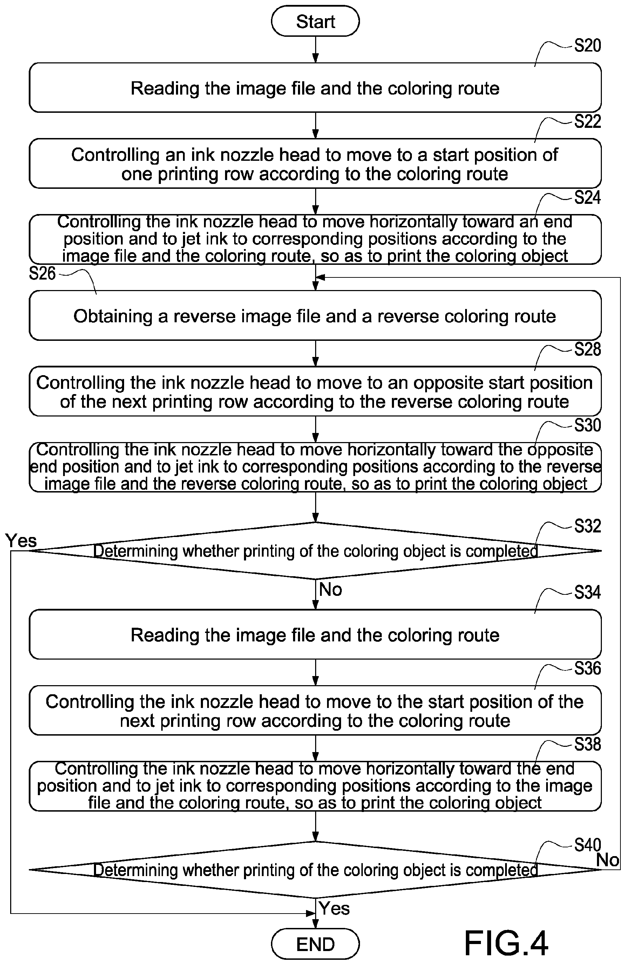

Referring to Fig. 4, Fig. 4 is a coloring process flow diagram according to the first embodiment of the present disclosure. To print one of the printing layers of the 3D object, the printer 1 controls the 3D nozzle head 12 to print the sliced object corresponding to the printing layer according to the object printing file. Then, each step shown in Fig. 4 is executed to control the ink nozzle head 13 to print the coloring object on the sliced object, thereby coloring the sliced object.

To execute the coloring operation, first the printer 1 reads the image file and the coloring route (step S20) corresponding to the printing layer. As mentioned above, the image file mainly records an image of the coloring object corresponding to the printing layer, and the coloring route records the start position and the end position of each of the printing rows of the ink nozzle head on the printing platform 11.

In the present disclosure, a width of a printing row is substantially equal to a width of a nozzle of the ink nozzle head 13. In one embodiment, the printer 1 decides the number of the printing rows (e.g. three or five printing rows) according to an upper boundary edge and a lower boundary edge of the printing platform 11. In another embodiment, the printer 1 decides the number of the printing rows according to a size of the coloring object. In the following embodiment, the number of the printing rows is three as an example; however, the present disclosure is not limited to any particular number of the printing rows.

After step S20, the printer 1 controls the ink nozzle head 13 according to the coloring route obtained, so as to move the ink nozzle head 13 to the start position of one (e.g. the first printing row) of the printing rows (step S22). After the ink nozzle head 13 moves to the start position of the first printing row, the printer 1 controls the ink nozzle head 13 according to the obtained image file and the coloring route, so as to control the ink nozzle head 13 to move horizontally from the start position of the first printing row toward the end position of the first printing row and to jet ink to corresponding positions to thereby print the coloring object (step S24). In other words, the printer 1 controls the ink nozzle head 13 to print the first printing row of the coloring object.

When the ink nozzle head 13 moves to the end position of the first printing row, it means printing of the first printing row is completed. Therefore, the printer 1 will then proceed to print the second printing row of the coloring object.

In conventional techniques, by contrast, the printer 1 needs to return the ink nozzle head 13 to the start position of the second printing row and controls the ink nozzle head 13 to print the second printing row of the coloring object by starting from the start position of the second printing row. However, in conventional techniques, the ink nozzle head 13 does not jet ink when moving from the end position of the first printing row to the end position of the second printing row, and as a result, the time for this movement is wasted.

In the present disclosure, the printer 1 prints the adjacent printing row of the coloring object, the printer 1 controls the ink nozzle head 13 to move according to the above-mentioned reverse coloring route. In detail, using the start position ofthe next printing row as the opposite end position and using the end position of the next printing row as the opposite start position, the printer 1 controls the ink nozzle head 13 to move horizontally from the opposite start position (i.e. the original end position) toward the opposite end position (i.e. the original start position) to print the next printing row of the coloring object.

To be specific, after step S24, the printer 1 obtains the reverse image file and the reverse coloring route (step S26), wherein the reverse image file records the horizontal reverse image of the coloring object, and the reverse coloring route records the opposite start position and the opposite end position of each printing row.

Then, the printer 1 controls the ink nozzle head 13 to move to the opposite start position of the next printing row (e.g. the second printing row) (step S28) according to the reverse coloring route. In other words, the printer 1 controls the ink nozzle head 13 to move to a position which is originally the end position ofthe next printing row. To be specific, in step S28, the printer 1 controls the ink nozzle head 13 to move from the end position of the previous printing row to the end position of the next printing row. Compared to conventional techniques, since this movement causes the ink nozzle head 13 to move only an extremely small distance, no problems of wasting time exist in the present disclosure.

When the ink nozzle head 13 moves to the opposite start position of the second printing row, the printer 1 controls the ink nozzle head 13 to move horizontally from the opposite start position of the second printing row toward the opposite end position of the second printing row and to jet ink to corresponding positions according to the reverse image file and the reverse coloring route, so as to print the coloring object (step S30). In other words, the printer 1 controls the ink nozzle head 13 to print the second printing row of the coloring object.

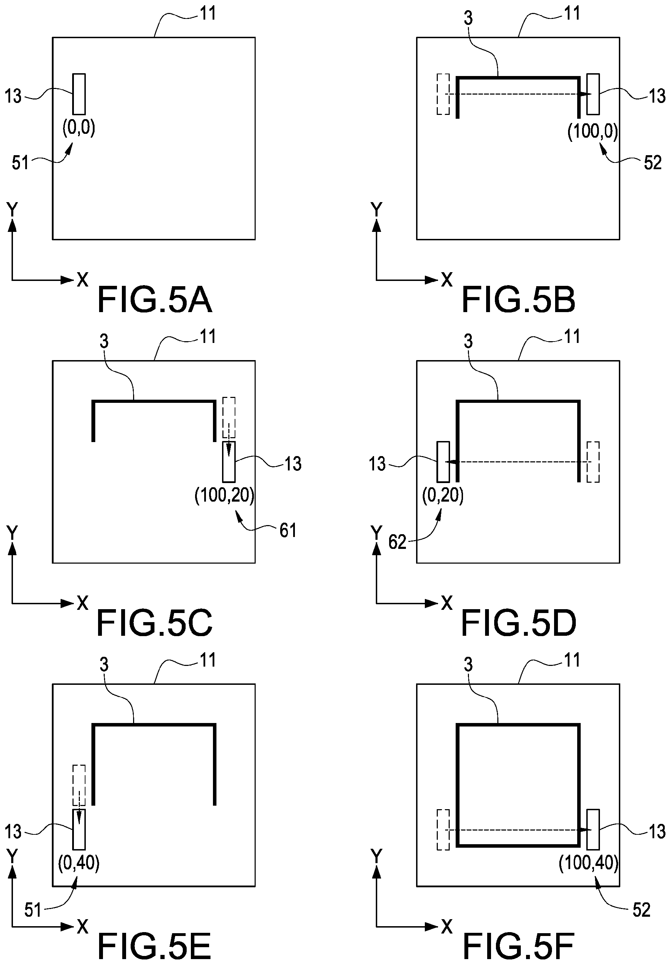

Please refer to Figs. 5A to 5F, which respectively show first to sixth coloring motion views according to the first embodiment of the present disclosure. First, as shown in Fig. 5A, the printer 1 prints the first printing row of the coloring object 3, the printer 1 first controls the ink nozzle head 13 to move to the start position 51 (e.g. coordinates (0, 0)) of the first printing row according to the coloring route. Then, as shown in Fig. 5B, according to the image file and the coloring route, the printer 1 controls the ink nozzle head 13 to move toward the end position 52 (e.g. coordinates (100, 0)) of the first printing row and to jet ink to corresponding positions, thereby printing the first printing row of the coloring object 3.

Then, referring to Fig. 5C, after printing of the first printing row of the coloring object 3 is completed, the printer 1 controls the ink nozzle head 13 according to the reverse coloring route to move the ink nozzle head 13 vertically from the end position 51 of the first printing row to the opposite start position 61 (e.g. coordinates (100, 20)) of the second printing row. Then, as shown in Fig. 5D, the printer 1 controls the ink nozzle head 13 to move horizontally toward the opposite end position 62 (e.g. coordinate (0, 20)) of the second printing row and to jet ink to corresponding positions according to the reverse image file and the reverse coloring route, thereby printing the second printing row of the coloring object 3.

From Figs. 5C and 5D, it is apparent that, in the present embodiment, the opposite start position of the second printing row is the same as the end position of the second printing row, and the opposite end position of the second printing row is the same as the start position of the second printing row.

Next, as shown in Fig. 5E, after printing of the second printing row of the coloring object 3 is completed, the printer 1 then controls the ink nozzle head 13 to move from the opposite end position 62 of the second printing row to the start position 51 (e.g. coordinates (0, 40)) of the third printing row (i.e. the third of the printing rows) according to the coloring route. After that, as shown in Fig. 5F, the printer 1 controls the ink nozzle head 13 to move horizontally toward the end position 52 (e.g. coordinates (100, 40)) of the third printing row and to jet ink to corresponding positions according to the image file and the coloring route, so as to print the third printing row of the coloring object 3.

In the embodiment shown in Figs. 5A to 5F, an example is given in which the coloring object 3 printed is of left-right symmetrical square shape. In this embodiment, even if no reverse image files are generated, the printer 1 can still print the coloring object 3 by using the image file only, and no problems would occur. However, when the printer 1 is to print a coloring object of left-right asymmetrical shape, it is required that printing in the forward direction is carried out with reference to the image file, and printing in the backward direction is carried out with reference to the reverse image file, so as to avoid incorrect image problems.

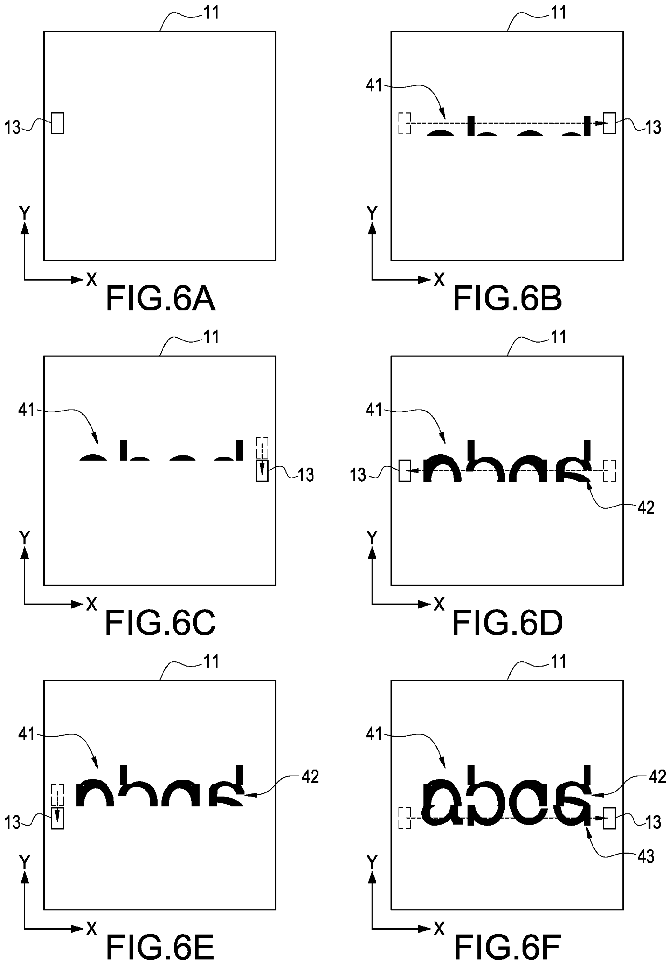

Please refer to Figs. 6A to 6F, which are first to sixth coloring motion views according to the second embodiment of the present disclosure. In the present embodiment, an example is given in which a content of the coloring object printed by the printer 1 is "abcd".

As shown in Fig. 6A, first the printer 1 controls the ink nozzle head 13 to move to the start position of the first printing row according to the coloring route. Then, as shown in Fig. 6B, the printer 1 controls the ink nozzle head 13 to move horizontally toward the end position of the first printing row and to jet ink at the same time according to the image file and the coloring route, so as to print a first portion coloring object 41.

As shown in Fig. 6C, after printing of the first portion coloring object 41 is completed, the printer 1 controls the ink nozzle head 13 to move from the end position of the first printing row to the opposite start position of the second printing row according to the reverse coloring route. Then, as shown in Fig. 6D, the printer 1 controls the ink nozzle head 13 to move horizontally toward the opposite end position of the second printing row and to jet ink at the same time according to the image file and the reverse coloring route, so as to print a second portion coloring object 42.

As shown in Fig. 6E, after printing of the second portion coloring object 42 is completed, the printer 1 controls the ink nozzle head 13 to move from the opposite end position of the second printing row to the start position of the third printing row according to the coloring route. Then, as shown in Fig. 6F, the printer 1 controls the ink nozzle head 13 to move horizontally toward the end position of the third printing row and to jet ink at the same time according to the image file and the coloring route, so as to print a third portion coloring object 43.

According to the embodiment shown in Figs. 6A to 6F, when the processor is performing the slicing process, the processor does not generate the reverse image file recording the horizontal reverse image of the coloring object. Therefore, when the printer 1 moves the ink nozzle head 13 and controls the ink nozzle head 13 to jet ink at the same time according to the image file and the coloring route, the coloring objects 41,43 are correctly printed. However, when the printer 1 moves the ink nozzle head 13 and controls the ink nozzle head 13 to jet ink according to the image file and the reverse coloring route, the coloring object 42 is reversely printed, which does not meet the demand. In light of the above description, it is necessary for the quick coloring method to generate the reverse image file recording the horizontal reverse image of the coloring object.

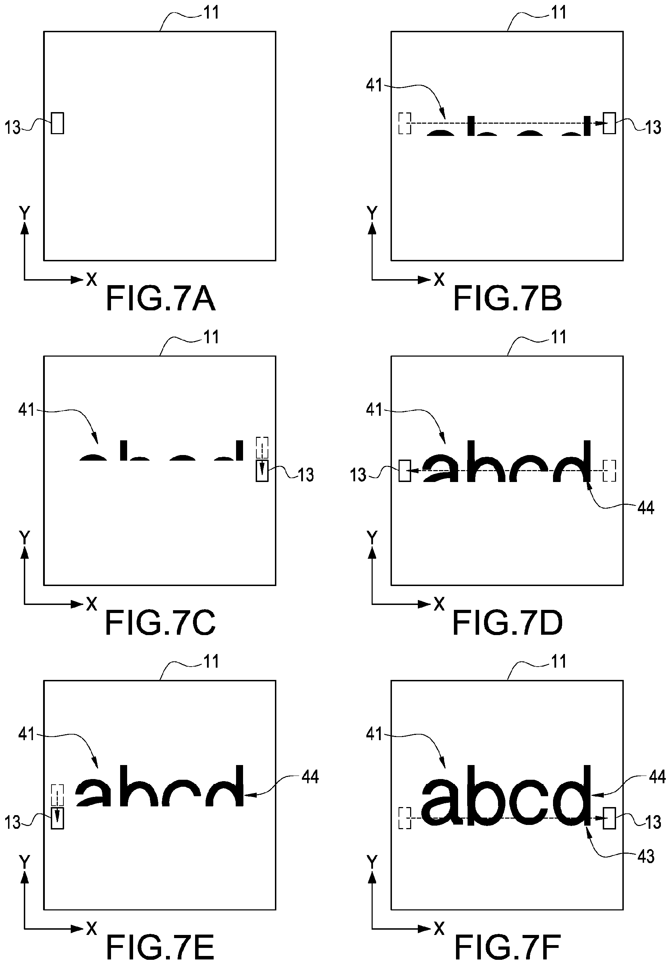

Please refer to Figs. 7A to 7F, which are first to sixth coloring motion view according to the third embodiment of the present disclosure. In this embodiment, an example is given in which a content of the coloring object printed by the printer 1 is "abcd".

As shown in Fig. 7A, first the printer 1 controls the ink nozzle head 13 to move to the start position of the first printing row according to the coloring route. Then, as shown in Fig. 7B, the printer 1 controls the ink nozzle head 13 to move horizontally toward the end position of the first printing row and to jet ink at the same time according to the image file and the coloring route, so as to print the first portion coloring object 41.

As shown in Fig. 7C, after printing of the first portion coloring object 41 is completed, the printer 1 controls the ink nozzle head 13 to move from the end position of the first printing row to the opposite start position of the second printing row according to the reverse coloring route. Then, as shown in Fig. 7D, the printer 1 controls the ink nozzle head 13 to move horizontally toward the opposite end position of the second printing row and to jet ink at the same time according to the reverse image file and the reverse coloring route, so as to print the second portion coloring object 44. The second portion coloring object 44 in the present embodiment and the second portion coloring object 42 in Fig. 6D are printed in opposite directions.

As shown in Fig. 7E, after printing of the second portion coloring object 44 is completed, the printer 1 controls the ink nozzle head 13 to move from the opposite end position of the second printing row to the start position of the third printing row according to the coloring route. Then, as shown in Fig. 7F, the printer 1 controls the ink nozzle head 13 to move horizontally toward the end position of the third printing row and to jet ink at the same time according to the image file and the coloring route, so as to print the third portion coloring object 43.

In the present embodiment shown in Figs. 7A to 7F, when the printer 1 is printing the first portion coloring object 41 and the third portion coloring object 43, printing is carried out according to the image file and the coloring route. However, when the printer 1 is printing the second portion coloring object 44, printing is carried out according to the reverse image file and the reverse coloring route. Therefore, the printer 1 of the present disclosure performs the coloring operation, whether the ink nozzle head 13 is moving forwards or backwards, thereby achieving quick coloring.

It should be noted that, in one embodiment, the printer 1 prints all odd-number rows (e.g. the first printing row shown in Fig. 7B and the third printing row shown in Fig. 7F) of the printing rows according to the image file and the coloring route and prints all even-number rows (e.g. the second printing row shown in Fig. 7D) of the printing rows according to the reverse image file and the reverse coloring route. In another embodiment, the printer 1 prints all even-number rows of the printing rows according to the image file and the coloring route and prints all odd-number rows of the printing rows according to the reverse image file and the reverse coloring route, and the present disclosure is not limited in this regard.

In the present disclosure, the printer 1 controls the ink nozzle head 13 to move horizontally from the start position of each printing row toward the end position of each printing row, so as to print the coloring object. In addition to that, the opposite start position and the opposite end position of each printing row are generated based on the start position and the end position of each printing row. Therefore, the start position and the end position of each printing row must exactly cover an area for printing the entire coloring object.

In one embodiment, the printer 1 decides the start positions and the end positions according to a left boundary edge and a right boundary edge of the printing platform 11. In another embodiment, the 3D printer 1 decides the start positions and the end positions according to a size of the coloring object; however, the present disclosure is not limited in this regard.

Referring to Fig. 4 again, after step S30 (i.e. after printing of the second printing row of the coloring object is completed), the printer 1 determines whether printing of the coloring object is completed (step S32). If printing of the coloring object is completed, the printer 1 stops printing this printing layer. If printing of the coloring object is not yet completed, the printer 1 then reads the image file and the coloring route (step S34), and then the printer 1 controls the ink nozzle head 13 to move to the start position of the next printing row (e.g. the third printing row) according to the coloring route (step S36), and controls the ink nozzle head 13 to move horizontally from the start position of the third printing row toward the end position of the third printing row and to jet ink to corresponding positions according to the image file and the coloring route, so as to print the coloring object (step S38). In other words, the printer 1 controls the ink nozzle head 13 to print the third printing row of the coloring object.

Similarly, after step S38, the printer 1 determines whether printing of the coloring object is completed (step S40). If printing of the coloring object is completed, the printer 1 stops printing this printing layer. If printing of the coloring object is not yet completed, the printer 1 then re-executing steps S26 to S30 to control the ink nozzle head 13 to perform the coloring operation for the next printing row (e.g. the fourth printing row) according to the reverse image file and the reverse coloring route.

Similarly, if the fourth printing row is not the last one of the printing rows, the printer 1 then again executes steps S34 to S38 to control the ink nozzle head 13 to perform the coloring operation for the next printing row (e.g. the fifth printing row) according to the image file and the coloring route, and execution can proceed in a similar manner.

In the above-mentioned embodiment, an example is given in which the ink nozzle head 13 has only one ink cartridge filled with a monochromatic ink. However, in other embodiment, the ink nozzle head 13 can be disposed with multiple ink cartridges and can jet inks of different colors, so that the printed 3D model can have more colors.

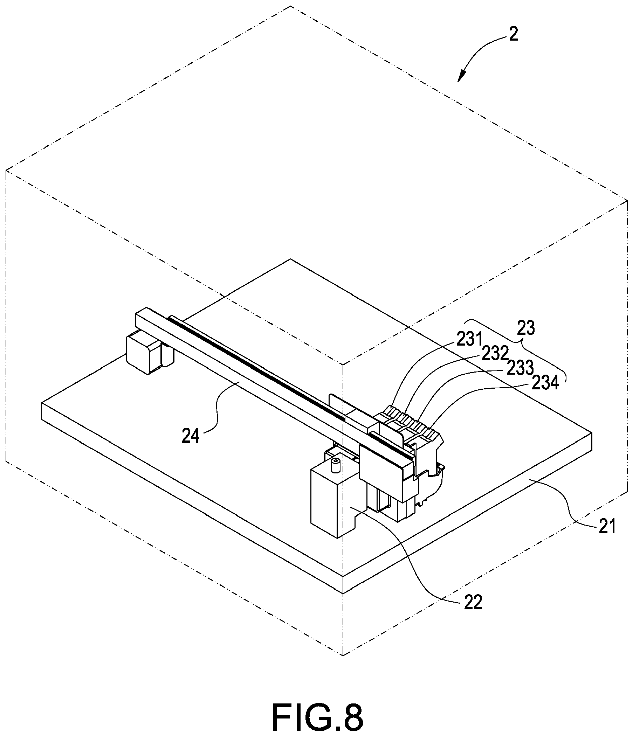

Referring to Fig. 8, FIG. 8 is a schematic view illustrating a 3D printer according to the first embodiment of the present disclosure. Fig. 8 discloses another printer 2 having a printing platform 21, a 3D nozzle head 22, an ink nozzle head 23, and a control rod 24. The printing platform 21, the 3D nozzle head 22, the ink nozzle head 23, and the control rod 24 in the present embodiment are the same as or similar to the printing platform 11, the 3D nozzle head 12, the ink nozzle head 13 and a control rod 14 shown in Fig. 1. The main difference is that, the ink nozzle head 23 in the present embodiment has multiple ink cartridges filled with inks of different colors and has multiple ink nozzles for jetting the inks of different colors, respectively.

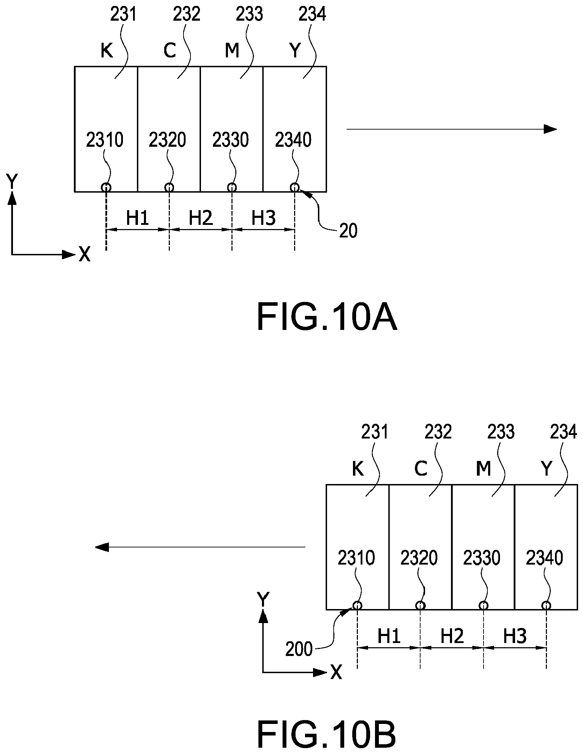

Referring to Fig. 8, the ink nozzle head 23 in the present embodiment includes a first ink cartridge 231 filled with a black ink, a second ink cartridge 232 filled with a cyan ink, a third ink cartridge 233 filled with a magenta ink, and a fourth ink cartridge 234 filled with a yellow ink, and the ink nozzle head 23 is disposed with a first nozzle 2310, a second nozzle 2320, a third nozzle 2330, and a fourth nozzle 2340 (as shown in Fig. 10A) respectively corresponding to the four ink cartridges 231 to 234.

In the present embodiment, the multiple nozzles 2310 to 2340 are arranged horizontally on the ink nozzle head 23, and the printer 2 controls the ink nozzle head 23 to move horizontally along an arrangement direction of the nozzles 2310, 2320, 2330, 2340. In other words, if the printer 2 controls the ink nozzle head 23 to move along the X axis, then the arrangement direction of the nozzles 2310 to 2340 has to be parallel to the X axis. If the printer 2 controls the ink nozzle head 23 to move along a Y axis, the nozzles 2310 to 2340 have to be arranged in a direction parallel to the Y axis.

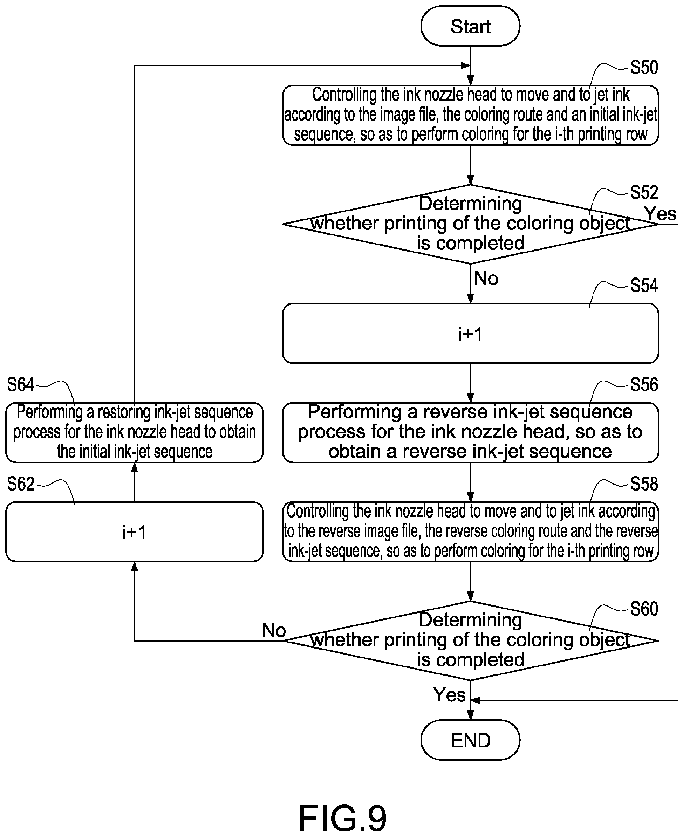

Referring to Fig. 9, FIG. 9 is a coloring process flow view according to the second embodiment of the present disclosure. As shown in Fig. 9, when the printer 2 is to perform the coloring operation for the sliced object printed by the 3D nozzle head 22, the printer 2 first controls the ink nozzle head 23 to move and jet ink (herein, printing is carried out along the forward direction) according to the image file, the coloring route and an initial ink-jet sequence, so as to perform the coloring operation for the i-th printing row (step S50). In detail, the initial ink-jet sequence is a predetermined ink-jet order according to which the nozzles 2310, 2320, 2330, 2340 jet ink when printing is carried out along the forward direction.

After step S50, the printer 2 determines whether printing of the coloring object is completed (step S52). If printing of the coloring object is completed, the printer 2 ends coloring.

If printing of the coloring object is not completed yet, the printer 2 adds one to the number i (step S54, i.e. getting ready to proceed to the next printing row), and the printer 2 performs a reverse ink-jet sequence process for the ink nozzle head 23, so as to obtain a reverse ink-jet sequence (step S56). Then, the printer 2 controls the ink nozzle head 23 to move and to jet ink (herein, printing is carried out in the backward direction) according to the reverse image file, the reverse coloring route and the reverse ink-jet sequence, so as to perform the coloring operation for the i-th printing row (step S58). In detail, the reverse ink-jet sequence is an ink-jet order set by the printer 2, according to which the nozzles 2310 to 2340 jet ink when printing is carried out along the backward direction.

It should be noted that, in step S50, the printer 2 controls the ink nozzle head 23 to move according to the coloring route and controls the ink nozzle head 23 to jet ink according to the image file and the initial ink-jet sequence. In step S58, the printer 2 controls the ink nozzle head 23 to move according to the reverse coloring route and controls the ink nozzle head 23 to jet ink according to the reverse image file and the reverse ink-jet sequence.

After step S58, the printer 2 determines whether printing of the coloring object is completed (step S60). If printing of the coloring object is completed, then the printer 2 ends coloring.

If printing of the coloring object is not completed yet, the printer 2 adds one to the number i (step S62, i.e. getting ready to proceed to perform the coloring operation for the next printing row), and the printer 2 performs a restoring ink-jet sequence process to obtain the initial ink-jet sequence (step S64) for the ink nozzle head 23. Then, the printer 2 returns to step S50 and executes step S50 to control the ink nozzle head 23 to move and to jet ink (herein, printing is carried out along the forward direction) according to the image file, the coloring route and the initial ink-jet sequence, so as to perform the coloring operation for the i-th row. The printer 2 will continue performing the above-mentioned steps until printing of the coloring object is completed.

Please refer to Figs. 10A and 10B, which are a first coloring motion view and a second coloring motion view according to the fourth embodiment of the present disclosure. In one embodiment, the printer 2 records gap distances between the nozzles 2310 to 2340. In detail, as shown in Fig. 10A, the printer 2 records a first gap distance H1 between the first nozzle 2310 and the second nozzle 2320, a second gap distance H2 between the second nozzle 2320 and the third nozzle 2330, and a third gap distance H3 between the third nozzle 2330 and the fourth nozzle 2340.

The printer 2 initially use one (the fourth nozzle 2340 in the embodiment shown in Fig. 10A) of the nozzles 2310 to 2340 closest to the end position as an initial anchor position 20 for the ink nozzle head 23. When the ink nozzle head 23 is located at the start position, the printer 2 uses the initial anchor position 20 as a start point for a coloring sequence when the printer 2 controls the ink nozzle head 23 to perform printing in the forward direction according to the image file, the coloring route and the initial ink-jet sequence.

Referring to Fig. 10B, when performing the reverse ink-jet sequence process, the printer 2 uses one (e.g. the first nozzle 2310 in the embodiment of Fig. 10B) of the nozzles 2310 to 2340 farthest from the initial anchor position 20 as an opposite anchor position 200. The reverse ink-jet sequence is generated by a calculation based on the opposite anchor position 200 and the gap distances H1, H2, H3 between the nozzles 2310 to 2340.

In the embodiment shown in Fig. 10A, when the printer 2 controls the ink nozzle head 23 to perform printing in the forward direction (e.g. moving from left most to right most on the printing platform 21), the ink nozzle head 23 jets ink according to the following sequence: the fourth nozzle 2340 (from which the yellow ink is jetted) → the third nozzle 2330 (from which the magenta ink is jetted) → the second nozzle 2320 (from which the cyan ink is jetted) → the first nozzle 2310 (from which the black ink is jetted). On the contrary, in the embodiment in Fig. 10B, when the printer 2 controls the ink nozzle head 23 to perform printing in the backward direction (e.g. moving from right most to left most on the printing platform 21), the ink nozzle head 23 jets ink according to the following sequence: the first nozzle 2310 (from which the black ink is jetted) → the second ink nozzle 2320 (from which the cyan ink is jetted) → the third ink nozzle 2330 (from which the magenta ink is jetted) → the fourth ink nozzle 2340 (from which the yellow ink is jetted).

Accordingly, through the use of the opposite anchor position 200 and the calculation for obtaining the reverse ink-jet sequence, the printer 2 is prevented from jetting inks with various colors at wrong time and/or wrong locations when controlling the ink nozzle head 23 to perform printing in the backward direction, thus avoiding causing printing failures of the coloring objects.

By using the quick coloring method, the printer controls the ink nozzle head to perform printing in both the forward direction and the backward direction, so that a coloring speed greatly increases.

## Claims

1. A quick coloring method for a three-dimensional (3D) printer, the 3D printer (1) having an ink nozzle head (13), the quick coloring method comprising:
a) controlling the 3D printer (1) to read an image file and a coloring route, wherein the image file records an image of a coloring object (3), the coloring route records a start position (51) and an end position (52) of each of a plurality of printing rows on a printing platform (11) for the ink nozzle head (13);
b) controlling the ink nozzle head (13) to move to a start position (51) of one of the printing rows according to the coloring route;
c) controlling the ink nozzle head (13) to move horizontally toward the end position (52) of the printing row and to jet ink to corresponding positions to print a coloring object (3) according to the image file and the coloring route;
d) after step c, controlling the 3D printer (1) to read a reverse image file and a reverse coloring route, wherein the reverse image file records a horizontal reverse image of the coloring object (3), and the reverse coloring route uses the start positions (51) as a plurality of opposite end positions (62) and uses the end positions (52) as a plurality of opposite start positions (61);
e) controlling the ink nozzle head (13) to move to the opposite start position (61) of the next printing row according to the reverse coloring route; and
f) controlling the ink nozzle head (13) to move horizontally toward the opposite end position (62) of the next printing row and to jet ink to corresponding positions to print the coloring object (3) according to the reverse image file and the reverse coloring route.

2. The quick coloring method for the 3D printer according to claim 1, further comprising the following steps:
g) after step f), determining whether printing of the coloring object (3) is completed; and
h) re-executing steps a) to c) before printing of the coloring object (3) is completed.

3. The quick coloring method for the 3D printer according to claim 2, further comprising the following steps:
i) after step h), determining whether printing of the coloring object (3) is completed; and
j) re-executing steps d) to f) before printing of the coloring object (3) is completed.

4. The quick coloring method for the 3D printer according to claim 3, wherein the 3D printer (1) prints all odd-number rows of the printing rows according to the image file and the coloring route and prints all even-number rows of the printing rows according to the reverse image file and the reverse coloring route.

5. The quick coloring method for the 3D printer according to claim 3, wherein the 3D printer (1) prints all even-number rows of the printing rows according to the image file and the coloring route and prints all odd-number rows of the printing rows according to the reverse image file and the reverse coloring route.

6. The quick coloring method for the 3D printer according to any of the preceding claims, wherein the 3D printer (1) decides the start positions (51) and the end positions (61) according to a left boundary edge and a right boundary edge of the printing platform (11).

7. The quick coloring method for the 3D printer according to any of the preceding claims, wherein a width of each of the printing rows is equal to a width of a nozzle of the ink nozzle head (13), and the 3D printer (1) decides the number of the printing rows according to an upper boundary edge and a lower boundary edge of the printing platform (11).

8. The quick coloring method for the 3D printer according to any of the preceding claims, wherein the 3D printer (1) decides the start positions (51) and the end positions (52) according to a size of the coloring object (3).

9. The quick coloring method for the 3D printer according to any of the preceding claims, wherein a width of each of the printing rows is equal to a width of a nozzle of the ink nozzle head (13), and the 3D printer (1) decides the number of the printing rows according to a size of the coloring object (3).

10. The quick coloring method for the 3D printer according to any of the preceding claims, further including the following steps before step a):
a01) importing a 3D object;
a02) performing an object slicing process on the 3D object to generate an object printing file of each of a plurality of printing layers;
a03) performing an image slicing process on the 3D object to generate the image file of each of the printing layers, wherein each of the image files records an image of the coloring object corresponding to each of the printing layers; and
a04) performing a reverse process on the image file and the coloring route of each of the printing layers to generate the reverse image file and the reverse coloring route of each of the coloring objects (3).

11. The quick coloring method for the 3D printer according to any of the preceding claims, wherein the ink nozzle head (23) includes a plurality of ink cartridges (231 to 234) with different color inks and includes a plurality of nozzles (2310 to 2340) for discharging different color inks respectively.

12. The quick coloring method for the 3D printer according to claim 11, wherein the ink cartridges (231 to 234) include a first ink cartridge (231) filled with a black ink, a second ink cartridge (232) filled with a cyan ink, a third ink cartridge (233) filled with a magenta ink, and a fourth ink cartridge (234) filled with a yellow ink, and the number of the nozzles (2310 to 2340) is four.

13. The quick coloring method for the 3D printer according to claim 11, wherein in step c) and step f), the ink nozzle head (23) is controlled to move horizontally along an arrangement direction of the nozzles (2310 to 2340).

14. The quick coloring method for the 3D printer according to claim 13, further comprising the following steps:
k) after step c, controlling the 3D printer (2) to perform a reverse ink-jet sequence process to obtain a reverse ink-jet sequence, wherein in step f, the nozzles (2310 to 2340) on the ink nozzle head (23) is controlled to jet ink according to the reverse ink-jet sequence; and
1) after step f), controlling the 3D printer (2) to perform a restoring ink-jet sequence process to obtain an initial ink-jet sequence, wherein in step c), the nozzles (2310 to 2340) on the ink nozzle head (23) are controlled to jet ink according to the initial ink-jet sequence.

15. The quick coloring method for the 3D printer according to claim 14, wherein in the reverse ink-jet sequence process, one of the nozzles (2310 to 2340) farthest from an initial anchor position (20) of the ink nozzle head (23) is used as an opposite anchor position (200), and the reverse ink-jet sequence is generated by a calculation based on the opposite anchor position (200) and based on gap distances (H1 to H3) between the nozzles (2310 to 2340).
